# EUROPEAN PATENT SPECIFICATION

(11) **EP 4 203 303 B1**
(45) Date of publication and mention of the grant of the patent: **04.12.2024**
(21) Application number: 21315285.3
(22) Date of filing: 21.12.2021
(51) Int. Cl.: H02S 50/10

(54) **METHOD FOR ASSESSING EARLY DEGRADATION IN PHOTOVOLTAIC MODULE MATERIALS**
VERFAHREN ZUR BEURTEILUNG DES FRÜHZEITIGEN ABBAUS IN MATERIALIEN VON PHOTOVOLTAISCHEN MODULEN
PROCÉDÉ D'ÉVALUATION DE LA DÉGRADATION PRÉCOCE DES MATÉRIAUX DE MODULE PHOTOVOLTAÏQUE

(43) Date of publication of application: 28.06.2023
(73) Proprietor: TotalEnergies OneTech, 92400 Courbevoie (FR); CENTRE NATIONAL DE LA RECHERCHE SCIENTIFIQUE (CNRS), 75016 Paris (FR); Université de Lille, 59800 Lille (FR)
(72) Inventor: Aid, Sara, 75019 Paris (FR); Betremieux, Isabelle, 77300 Fontainebleau (FR); Pondaven, Simon, 69007 Lyon (FR); Vezin, Hervé, 59650 Villeneuve d'Ascq (FR); Babic, Nikola, 69002 Lyon (FR)
(74) Representative: Innovincia

(56) References cited:
- BIRKHOLZ M ET AL: "Electron-paramagnetic resonance (EPR) and light-induced EPR investigations of CuGaSe2", THIN SOLID FILMS, ELSEVIER, AMSTERDAM, NL, vol. 361, 9 June 2017 (2017-06-09), pages 243 - 247, XP085058546, ISSN: 0040-6090, DOI: 10.1016/S0040-6090(99)00781-6

## Description

### Background of the invention

The field of the present invention refers to the field of photovoltaic modules. The document by BIRKHOLZ M ET AL: "Electron-paramagnetic resonance (EPR) and light-induced EPR investigations of CuGaSe2",THIN SOLID FILMS, ELSEVIER, AMSTERDAM, NL, vol. 361, 9 June 2017 (2017-06-09), pages 243-247, XP085058546,ISSN: 0040-6090, DOI: 10.1016/ S0040-6090(99)00781-6, is a relevant prior art.

Photovoltaic modules are widely used to provide a renewable source of energy. Photovoltaic modules generally comprise a laminate comprising a series of photovoltaic cells sandwiched between two encapsulation layers. The laminate may also comprise a front protection sheet made of glass or plastic and a backsheet.

However, some of the materials used in the laminate and in particular the encapsulation layers tend to degrade with ageing, notably due to photodegradation leading to a loss of efficiency of the photovoltaic panel. It can therefore be interesting to monitor the ageing of the photovoltaic modules and to detect ageing as early as possible and during the whole lifetime of the photovoltaic module in order to manage maintenance and replacement of photovoltaic modules.

Furthermore, in order to enhance the lifetime of the photovoltaic panels, it is necessary to develop alternative compositions of the encapsulation layer providing a higher resistance to the ageing degradation and therefore to develop a method to assess such ageing resistance which is reliable, easy to implement and which can provide results within a limited time.

The present invention aims therefore at providing a solution for assessing an early ageing of photovoltaic modules and for assessing an ageing resistance of photovoltaic modules.

### Summary of the invention

The present invention refers to a method for assessing an ageing degradation state of a photovoltaic module comprising a laminate of several layers made of different elements wherein the method comprises a step of applying an electron paramagnetic resonance spectroscopy measurement to the photovoltaic module to determine a content of at least one selected radical generated during a lifetime of the photovoltaic module as a consequence of a degradation of elements of the photovoltaic module and/or a content of at least one additive within the photovoltaic module which is consumed during the lifetime of the photovoltaic module as a consequence of a degradation of elements of the photovoltaic module.

The use of electron paramagnetic resonance spectroscopy measurement enables detecting an early ageing of the encapsulation layer of a photovoltaic module through the detection of organic radicals species generated either during the ageing degradation of the encapsulation layer or through the disappearance of additives of the encapsulation layer that are consumed during the ageing degradation of the encapsulation layer.

The invention may also refer to one of the following features:
The photovoltaic module comprises photovoltaic cells embedded in an encapsulation layer and the electron paramagnetic resonance spectroscopy measurement is applied to determine a content of at least one selected organic radical generated within the encapsulation layer during a lifetime of the photovoltaic module as a consequence of a degradation of elements of the encapsulation layer and/or a content of at least one additive within the encapsulation layer which is consumed during the lifetime of the photovoltaic module as a consequence of a degradation of encapsulation layer;
The at least one organic radical is selected according to environmental conditions of the photovoltaic module such as an amount of light exposure, an amount of moisture and/or an amount of oxygen;
The application of an electron paramagnetic resonance spectroscopy measurement to the photovoltaic module is achieved at different time intervals over a predicted lifetime of the photovoltaic module to monitor a temporal evolution of the ageing degradation;
The application of an electron paramagnetic resonance spectroscopy measurement is achieved to portions of the photovoltaic module associated to different locations in particular an edge portion and a center portion of the photovoltaic module;
The photovoltaic module is installed on a production site and the application of an electron paramagnetic resonance spectroscopy measurement is achieved in situ directly on the photovoltaic module of the production site;
The degradation of the encapsulation layer corresponds to an oxidation of a component of the encapsulation layer;
The organic radicals are selected among one of the following categories:
   - oxigen-centered radicals,
   - carbon-centered radicals,
   - sulfur-centered radicals,
   - nitrogen-centered radicals;
The encapsulation layer comprises an anti-oxidant additive that is consumed during a lifetime of the photovoltaic module;
The additive is a hindered amine light stabilizer "HALS" producing nitroxide radicals;

The encapsulation layer comprises Ethylene Vinyl Acetate "EVA" copolymer producing oxygen-centered and/or carbon-centered radicals and/or nitrogen-centered radicals and/or sulfur-centered radicals.

The present invention also refers to a method for assessing an ageing resistance of a photovoltaic module comprising a step of applying ageing conditions on the photovoltaic module during a predetermined duration and a step of applying an electron paramagnetic resonance spectroscopy measurement to the photovoltaic module to determine a content of at least one selected radical generated within the photovoltaic module during the step of applying ageing conditions on the photovoltaic module as a consequence of a degradation of the photovoltaic module and/or a content of at least one additive within the photovoltaic module which is consumed during the step of applying ageing conditions on the photovoltaic module as a consequence of a degradation of the photovoltaic module wherein the step of applying ageing conditions comprises the application of ultra-violet "UV" radiations. According to another aspect of the invention, the application of ageing conditions also comprises at least one of the following steps:
- applying a predefined moisture level,
- applying a predetermined temperature or predetermined temperature cycles.

According to a further aspect of the invention, the steps of applying ageing conditions and of applying an electron parametric resonance spectroscopy measurement to the photovoltaic module are achieved several times associated with different ageing cycles.

According to another aspect of the invention, the different steps are applied to different photovoltaic modules having different compositions to compare the ageing resistance of the different photovoltaic modules.

The present invention also refers to a photovoltaic module comprising photovoltaic cells embedded in an encapsulation layer and an electron paramagnetic resonance spectrometer configured for applying an electron paramagnetic resonance spectroscopy measurement to a portion of the encapsulation layer of the photovoltaic module to determine a content of at least one selected organic radical generated within the encapsulation layer during a lifetime of the photovoltaic module as a consequence of a degradation of the encapsulation layer and/or a content of at least one additive within the encapsulation layer which is consumed during a lifetime of the photovoltaic module as a consequence of a degradation of the encapsulation layer.

According to another aspect of the invention, the electron paramagnetic resonance spectrometer is made by a chipset embedded in the encapsulation layer and a magnet arranged on the back side of the photovoltaic module next to the chipset.

According to a further aspect of the invention, the photovoltaic module comprises a plurality of electron paramagnetic resonance chipsets arranged in different locations of the photovoltaic module, notably in locations close to the edges and close to the center of the photovoltaic module.

The present invention also refers to a portable electron paramagnetic resonance spectrometer configured for applying an electron paramagnetic resonance measurement to a photovoltaic module to determine a content of at least one selected radical generated within the photovoltaic module during a lifetime of the photovoltaic module as a consequence of a degradation of the photovoltaic module and/or a content of at least one additive within the photovoltaic module which is consumed during a lifetime of the photovoltaic module as a consequence of a degradation of the photovoltaic module.

### Brief description of the drawings

[Fig.1] is an exploded view of a photovoltaic module;
[Fig.2] is a diagram of the reactions occurring during an autoxidation process of EVA polymer;
[Fig.3a] is an EPR spectrum obtained from an electron paramagnetic resonance spectroscopy of an encapsulation layer comprising a UV-absorber and hindered amine light stabilizer at a first ageing stage;
[Fig.3b] is an EPR spectrum obtained from an electron paramagnetic resonance spectroscopy of an encapsulation layer comprising a UV-absorber and hindered amine light stabilizer at a second ageing stage;
[Fig.3c] is an EPR spectrum obtained from an electron paramagnetic resonance spectroscopy of an encapsulation layer comprising a UV-absorber and hindered amine light stabilizer at a third ageing stage;
[Fig.4] is an EPR spectrum obtained from an electron paramagnetic resonance spectroscopy of an encapsulation layer without UV-absorber;
[Fig.5] is a flow chart of the steps of a method for assessing an ageing resistance;
[Fig.6] is a perspective and exploded view of a photovoltaic module according to an embodiment of the present invention.

### Detailed description of the invention

The following achievements are examples. Although, the specification refers to one or several embodiments, it does not imply that each reference refers to the same embodiment or that the features apply only to a single embodiment. Simple features of different embodiments can also be combined to provide other embodiments.

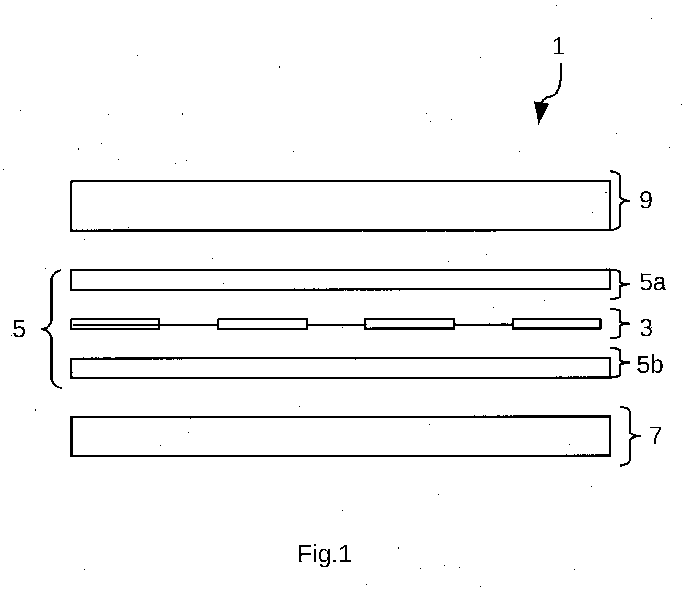

The present invention refers to a method for assessing an ageing degradation of a photovoltaic module at different stages of the photovoltaic module lifetime and notably at an early stage, before the appearance of a visible degradation. As represented in the exploded view of fig.1, a photovoltaic module 1 is generally made of a laminate comprising several photovoltaic cells 3 such as a series of photovoltaic cells 3 sandwiched between a front encapsulation layer 5a and a back encapsulation layer 5b. The photovoltaic cells 3 are then embedded in an encapsulation layer 5 corresponding to the combination of the front and the back encapsulation layers 5a, Sb. The laminate may also comprise a back protection sheet 7 and a front protection sheet 9. At least, the front encapsulation layer 5a and the front protection sheet 9 are transparent to enable light rays to reach the photovoltaic cells 3. The encapsulation layers 5a, 5b are generally made of resin, for example based on an Ethylene Vinyl Acetate "EVA" copolymer. Furthermore, the encapsulation layer 5 may comprise additives to limit the degradation of the encapsulation layer 5 and therefore to enhance the lifetime of the photovoltaic module 1. Indeed, a photovoltaic module 1 undergoes deleterious environmental conditions and primarily light radiations, in particular UV radiations, that tend to degrade the components of the encapsulation layer 5 leading to an ageing of the photovoltaic module 1. Other parameters such as moisture and oxygen also participate to the degradation of the encapsulation layer 5. Such ageing degradation of the photovoltaic module 1 is easy to detect at a later stage (corresponding to a large decrease of the photovoltaic efficiency) as the encapsulation layer 5 tends to lose its transparency and to become yellow due to the production of oxidation products such as ketones and carboxylic acides (acetic acid). In order to detect an ageing of the photovoltaic module 1 at earlier stages, the present invention refers to the application of an electron paramagnetic resonance spectroscopy measurement to the photovoltaic module 1 and notably to the encapsulation layer 5. Indeed, the Electron Paramagnetic Resonance "EPR" , also called electron spin resonance "ESR", spectroscopy refers to an instrumental technique for studying species and materials containing unpaired electrons (paramagnetic species). Due to the presence of unpaired electron(s), these species are paramagnetic and possess an angular momentum called spin parametrized by the spin quantum S (S=+/- ½ for one single electron). The electron spin can be in two states which differ in the orientation of the angular moment but not in its magnitude. These states are labeled with the quantum number Mₛ=+/-1/2 and in the absence of any interaction with the environment, they are degenerate, i.e. they have the same energy. However, the spin angular momentum of the electron is always associated with a magnetic moment *µ* = - *gβ S* with g the g-factor and β the Bohr magneton. When an external magnetic field is applied, like in an EPR experiment, a difference in energy of the two states appears and it is proportional to the strength of the external magnetic field. This phenomenon is known as the Zeeman effect. The transition between these two energy levels occurs when the energy of the photon from the applied electromagnetic radiation matches the difference between the levels Δ*E*= *hv* = *gβ B* with h the Planck's factor, v the photon frequency, and B the magnetic field. The resonant absorption of photons is the basic principle that is used for obtaining EPR spectra. In the case of continuous wave EPR, the sample is irradiated with a fixed frequency electromagnetic wave while the magnetic field is swept. The absorption of energy is detected when conditions from the above equation are fulfilled. For better sensitivity, an oscillating magnetic field may be used and the obtained spectrum corresponds to the first derivative of the absorption spectrum.

The paramagnetic species can be transition metal ions, crystalline materials with lattice. defects, or organic radicals. Such EPR technique enables therefore the detection of elements associated with the ageing of the photovoltaic module 1 and in particular of the encapsulation layer 5 at early stages, before the appearance of ketones or carboxylic acids. These elements refer notably to organic radicals generated by the degradation/consumption of an element of the encapsulation layer 5. Thus, by monitoring at different time intervals over the lifetime of the photovoltaic module 1 the appearance and/or disappearance of one or several species, it is possible to detect an ageing degradation of a photovoltaic module 1 at a very early stage and to assess different ageing stages of the photovoltaic module 1 associated with different periods of its lifetime.

Different types of degradation may occur in the encapsulation layer 5 and these types of degradation may be triggered by one or several influencing parameters. In particular, the degradation may be triggered by light exposure and in particular ultra-violet "UV" radiations that have a high photon energy but also by other parameters such as moisture or oxygen which foster the oxidation reactions and more generally by a combination of these influencing parameters.

Thus, depending on the composition of the encapsulation layer 5 and possibly on the environmental conditions to which the photovoltaic module 1 is facing, the presence of different species associated with the degradation of the elements composing the photovoltaic module 1 may be monitored using electron paramagnetic resonance spectroscopy measurement to assess an ageing degradation stage of the encapsulation layer 5. Different examples will now be given but the present invention is not limited to these examples.

As indicated previously, the encapsulation layer 5 may be made of EVA copolymer. Such EVA copolymer undergoes autoxidation which is an autocatalyzed process of hycrocarbon oxidation by oxygen.

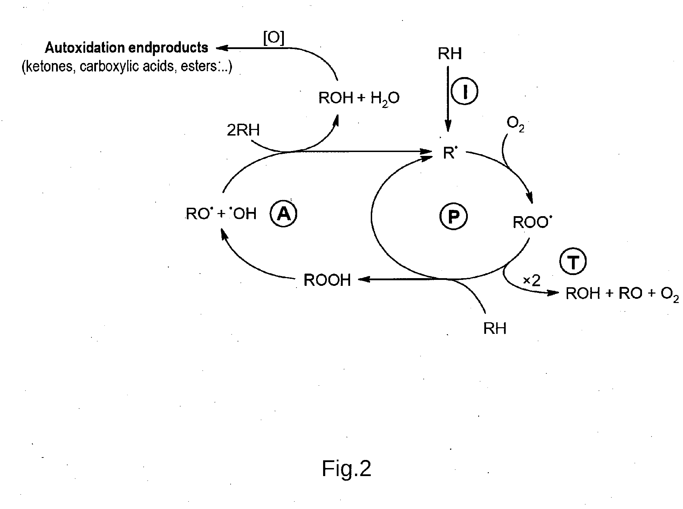

Fig.2 represents the reactions involved in such autoxidation. These reactions are spontaneous reactions occurring through a free radical mechanism wherein three stages can be recognized: initiation noted I in fig.2, propagation noted P and termination noted T. In the initial stage I, carbon centered radical (R^{•}) is generated via hydrogen abstraction by traces of transition metal ions, ionizing radiation or by oxygen. In the propagation phase P, carbon centered radical reacts very fast with atmospheric oxygen to produce peroxyl radical (ROO^{•}). Peroxyl radicals are less reactive, but still able to selectively abstract secondary or tertiary hydrogen atoms, thus accumulating as hydroperoxides (ROOH). Hydroperoxides easily decompose to reactive radicals such as alkoxyl (RO^{•}) and hydroxyl radicals (*OH) enabling chain branching. This autocatalyzed stage noted A is characterized by accelerated oxygen consumption and increased conversion. Until the reaction comes to a standstill corresponding to the termination T, many autoxidation end-products such as alcohols, aldehydes, ketones, carboxylic acids, and esters accumulate.

Thus, electron paramagnetic resonance spectroscopy measurement can be used to monitor the appearance and disappearance of carbon centered radicals and/or peroxyl radicals to detect an ageing stage of an encapsulation layer 5 comprising EVA corresponding to an early ageing with respect to visible ageing stages. Other types of radicals such as sulfur-centered radicals or nitrogen-centered radicals may also be monitored. Furthermore, other hydrocarbon-based polymers undergo an autoxidation process in the same manner so that early ageing stages may also be detected with encapsulation layers 5 made with other hydrocarbon-based polymers.

Besides, additives, such as antioxidant additives, are generally used in the composition of the encapsulation layer 5 in order to delay the ageing degradation of the encapsulation layer 5. Hindered Amine Light Stabilizer "HALS" may be used as such antioxidant additive. During the ageing degradation of the encapsulation layer 5, HALS is consumed or degraded to produce nitroxide radicals at an early stage of the encapsulation layer 5 ageing degradation so that the monitoring of such nitroxide radicals by electron paramagnetic resonance spectroscopy measurement may also allow detecting an early ageing of the encapsulation layer 5.

Furthermore, other ultra-violet absorbers as Tinuvin 328 or Cyasorb UV 531 are also generally used in the composition of the encapsulation layer 5 in order to enhance the resistance of the encapsulation layer 5 to UV radiation.

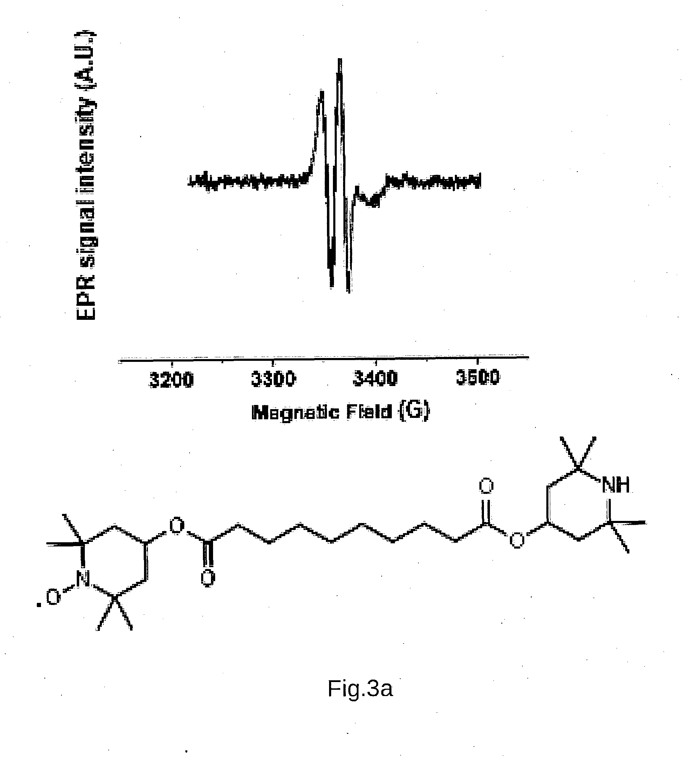

Figs.3a to 3c represent spectra obtained with electron paramagnetic resonance spectroscopy at different ageing stages in the presence of a UV absorber. (The spectrum represents a first derivative of a degree of absorption in function of a magnetic field strength G which is applied on the photovoltaic module 1). The EPR spectroscopy measurement is achieved on a small area of the photovoltaic module 1.

Fig.3a represents the spectrum at a first ageing stage. The spectrum discloses the content of only monoradical nitroxides corresponding to the molecule displayed in Fig.3a below the spectrum and in small quantity.

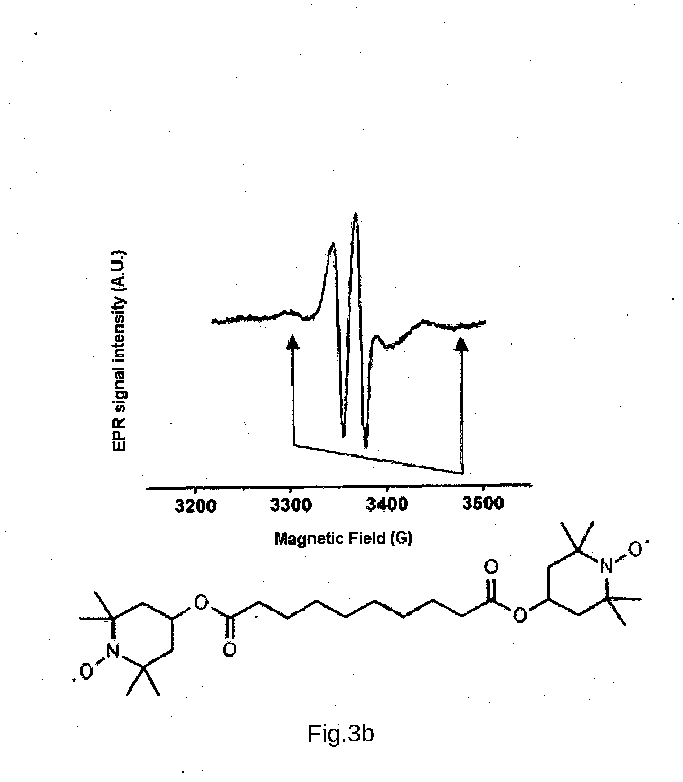

Fig.3b represents the spectrum at a second ageing stage (later than the first ageing stage). The spectrum discloses the content of a higher quantity of monoradical nitroxides (with respect to Fig.3a) and the appearance of biradical nitroxides designated by the arrows on the spectrum and corresponding to the molecule displayed in fig.3b below the spectrum.

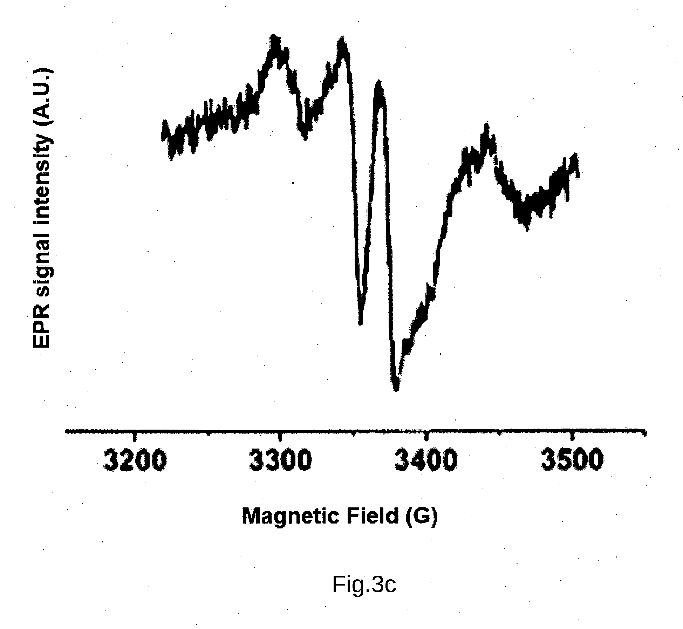

Fig.3c represents the absorption spectrum at a third ageing stage (later than the second ageing stage). The spectrum discloses only traces of monoradical and biradical nitroxides left.

Thus, the monitoring of the production of monoradical and biradical nitroxides in the encapsulation layer 5 enables assessing different ageing degradation stages of the encapsulation layer 5 corresponding to early stages (before the appearance of a visible degradation) and therefore way before the end of a predicted lifetime, early ageing degradation stages may correspond to half of the lifetime of the photovoltaic module 1.

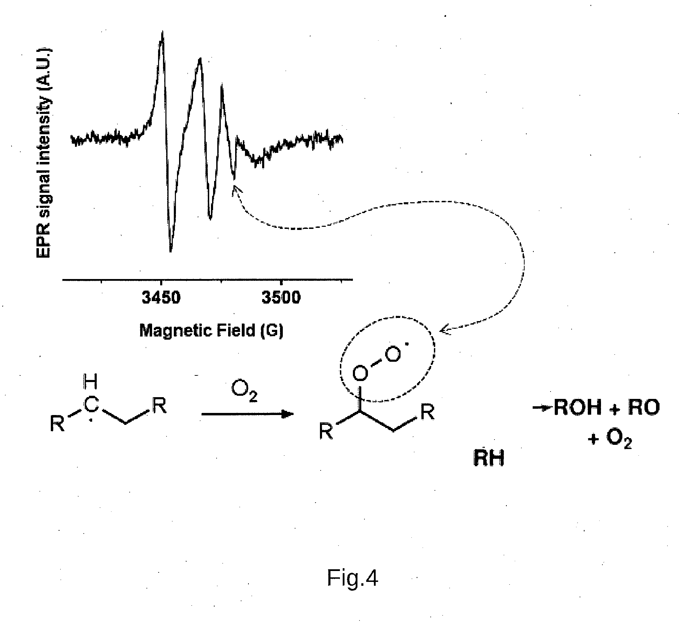

It has to be noted that in the absence of a UV absorber, the ageing may be much faster. As a matter of comparison, fig.4 represents an EPR spectrum at an ageing stage occurring between the first and the second ageing stages. The spectrum of Fig.4 discloses the appearance of peroxyl radical (ROO') which are the latest radicals intermediate before production of ketones and acid degradation products.

Thus, with an encapsulation layer 5 made of a combination of EVA copolymer and HALS, the application of an EPR spectroscopy measurement to detect the appearance and/or disappearance of carbon centered radicals, peroxyl radicals, monoradical nitroxides and biradical nitroxides enables detecting different ageing degradation stages of the encapsulation layer 5. It has to be noted that other species associated with the ageing of the photovoltaic module 1, such as other types of radicals linked to the ageing of the photovoltaic module 1 and located in the encapsulation layer 5 or in other layers of the photovoltaic module 1 may also be detected by EPR measurement in order to assess an ageing degradation stage of the photovoltaic module 1.

Furthermore, a monitoring by applying such EPR spectroscopy measurement at different intervals over the lifetime of the photovoltaic module 1 enables obtaining a temporal evolution of the ageing of the photovoltaic module 1 from a very early stage until the production of endproducts such as alcohols, aldehydes, ketones, carboxylic acids, and esters at a final ageing stage. Such detection and assessment of an early ageing degradation may help power plant manager to deal with the maintenance and replacement of their photovoltaic module fleet.

Furthermore, as the application of the EPR spectroscopy measurement is applied on a small area of the photovoltaic module 1, the EPR spectroscopy measurement may be applied to different parts of the photovoltaic module 1 to assess the ageing of different parts of the encapsulation layer 5 of the photovoltaic module 1. Indeed, ageing may be different between a border part or a central part of the photovoltaic module 1 due to the different interactions with environmental conditions so that the application of EPR spectroscopy measurements at different locations of the photovoltaic module 1 may allow assessing these ageing differences between the different parts and/or may provide a better estimation of the overall ageing of the photovoltaic module 1.

The present invention also refers to a portable electron paramagnetic resonance spectrometer which can be used in situ on a photovoltaic module 1 installed on a production site. Indeed, the application of an EPR spectroscopy measurement is a non-destructive technique and can be applied directly on a working photovoltaic module 1 of a production site, for example on a photovoltaic module 1 set up on a roof or a panel of a solar plant. As described previously, the EPR spectrometer is configured for applying an electron paramagnetic resonance measurement to a photovoltaic module 1 to determine a content of at least one selected radical generated within the photovoltaic module, such as an organic radical of the encapsulation layer 5, as a consequence of a degradation of the photovoltaic module, for exaple a degradation of the encapsulation layer 5, and/or a content of at least one additive within the photovoltaic module 1 which is consumed as a consequence of a degradation of the photovoltaic module 1.

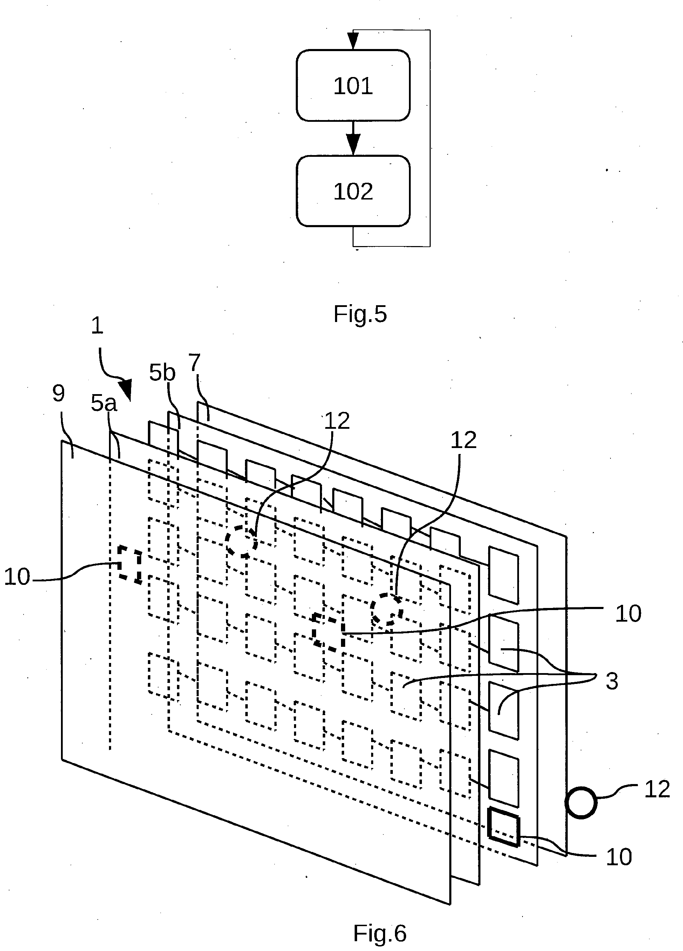

The present invention also refers to a photovoltaic module 1 comprising photovoltaic cells 3 embedded in an encapsulation layer 5 as described previously and also comprising an electron paramagnetic resonance spectrometer. The EPR spectrometer may be implemented in a chipset having a reduced size which can easily be built in the photovoltaic module 1, for example in a corner of the photovoltaic module 1. Fig.6 represents an example of a photovoltaic module 1 comprising three spectrometers made by three chipset 10 embedded between the encapsulation layers 5a and 5b and three magnets 12 associated respectively with the three chipset 10 and located and the back of the laminate next to the associated chipset 10. The magnet 12 are positioned at the back of the photovoltaic module 1 next to the chipset 10 to create a magnetic field external to the chipsets 10. In the example of fig.6, a first chipset 10 is located at the center of the photovoltaic module 1, a second chipset 10 is located at a corner of the photovoltaic module 1 and a third chipset 10 is located at an edge of the photovoltaic module 1. A different number of chipsets 10 and other locations may also be used without going beyond the scope of the invention. The EPR spectrometers are configured for applying an electron paramagnetic resonance spectroscopy measurement to the photovoltaic module 1 and in particular to the encapsulation layer 5 of the photovoltaic module 1 adjacent to the chipset 10 to determine a content of at least one selected organic radical generated within the encapsulation layer 5 during a lifetime of the photovoltaic module 1 as a consequence of a degradation of the encapsulation layer 5 and/or a content of at least one additive within the encapsulation layer 5 which is consumed during the lifetime of the photovoltaic module 1 as a consequence of a degradation of the encapsulation layer 5 as described previously. Such built-in chipset 10 enables a monitoring over time of the ageing degradation of the photovoltaic module 1. The built-in chipset 10 may comprise wireless communication means configured for communicating with a remote server so that measurements may be made at predetermined time intervals and the results of the measurements may be transmitted by the chipset 10 toward the remote server. The chipset 10 may have a size of 1cm *1cm and a thickness in the range of 500-600 µm. The reach of the spectrometer may be around 300 to 400 µm deep around the chipset 10. Moreover, as represented in fig.6, several chipsets 10 (and several asscoiated magnets 12) may be implemented in different locations of the photovoltaic module 1, for example at different borders and toward the center of the photovoltaic module 1 in order to monitor the ageing of the photovoltaic module 1 at different locations of the photovoltaic module 1 that may have different interactions with influence parameters.

The present invention also refers to a method for assessing the ageing resistance of an encapsulation layer 5 of a photovoltaic module 1. As disclosed previously, different compositions of the encapsulation layer 5 may be used and the manufacturers are continuously developing new compositions of encapsulation layers 5 using for example new additives. It is therefore very interesting for such manufacturers to be able to assess the ageing resistance of a new composition in a simple and fast manner in order to compare the ageing resistance of different compositions to decide which composition has the highest ageing resistance. Such ageing resistance may be assessed with different conditions (light exposure, moisture amount, temperature) corresponding to different implementation locations.

Fig.5 represents the different steps of the method for assessing the ageing resistance of an encapsulation layer 5 of a photovoltaic module 1 according to the present invention.

The first step 101 refers to a step of applying ageing conditions on the encapsulation layer 5 during a predetermined time. The application of ageing conditions refers to the application of UV radiations but may also refer to the application of a predetermined moisture level or a predetermined temperature or predetermined temperature cycles or the application of any other influencing parameters of the ageing degradation of the encapsulation layer 5 in order to reproduce the conditions undergone by the photovoltaic module 1 when implemented in situ. The intensity and the duration of the UV radiations may be chosen according to a required ageing speed.

The goal of the first step 101 is to obtain an accelerated ageing of the encapsulation layer 5.

The second step 102 refers to the application of an electron paramagnetic resonance spectroscopy to the encapsulation layer 5 to determine an amount of organic radicals produced and/or an amount of additives of the encapsulation layer 5 consumed by a degradation of a component of the encapsulation layer 5 during the first step 101. The second step 102 enables assessing an ageing degradation level according to the results of the EPR spectroscopy as described previously.

The steps 101 and 102 may correspond to a cycle which is repeated several times, the different cycles being associated with different ageing stages in order to monitor the ageing evolution over time. Such method enables therefore to assess an ageing resistance of a sample of encapsulation layer 5. Thus, the different steps may be applied on different samples of encapsulation layer 5 having different compositions in order to assess the ageing resistance of the different samples and to compare the ageing resistance of the different samples. Such method enables therefore to assess the efficiency of a new composition such as the use of a new additive with respect to another composition and helps therefore the manufacturers to develop new composition having improved ageing resistance.

## Claims

1. Method for assessing an ageing degradation state of a photovoltaic module (1) comprising a laminate of several layers made of different elements comprising an electron paramagnetic resonance spectrometer made by a chipset (10, 12) embedded in the laminate wherein the method comprises a step of applying an electron paramagnetic resonance spectroscopy measurement to the photovoltaic module (1) to determine a content of at least one selected radical generated during a lifetime of the photovoltaic module (1) as a consequence of a degradation of elements of the photovoltaic module (1) and/or a content of at least one additive within the photovoltaic module (1) which is consumed during the lifetime of the photovoltaic module (1) as a consequence of a degradation of elements of the photovoltaic module (1).

2. Method in accordance with claim 1 wherein the photovoltaic module (1) comprises photovoltaic cells (3) embedded in an encapsulation layer (5, 5a, 5b) and wherein the electron paramagnetic resonance spectroscopy measurement is applied to determine a content of at least one selected organic radical generated within the encapsulation layer (5, 5a, 5b) during a lifetime of the photovoltaic module (1) as a consequence of a degradation of elements of the encapsulation layer (5, 5a, 5b) and/or a content of at least one additive within the encapsulation layer (5, 5a, 5b) which is consumed during the lifetime of the photovoltaic module (1) as a consequence of a degradation of encapsulation layer (5, 5a, 5b).

3. Method in accordance with claim 1 or 2 wherein the at least one organic radical is selected according to environmental conditions of the photovoltaic module (1) such as an amount of light exposure, an amount of moisture and/or an amount of oxygen.

4. Method in accordance with one of the previous claims wherein the application of an electron paramagnetic resonance spectroscopy measurement to the photovoltaic module (1) is achieved at different time intervals over a predicted lifetime of the photovoltaic module (1) to monitor a temporal evolution of the ageing degradation.

5. Method in accordance with one of the previous claims wherein the application of an electron paramagnetic resonance spectroscopy measurement is achieved to portions of the photovoltaic module (1) associated to different locations in particular an edge portion and a center portion of the photovoltaic module (1).

6. Method in accordance with one of the previous claims wherein the photovoltaic module (1) is installed on a production site and wherein the application of an electron paramagnetic resonance spectroscopy measurement is achieved in situ directly on the photovoltaic module (1) of the production site.

7. Method in accordance with one of the previous claims wherein the degradation of the encapsulation layer (5, 5a, 5b) corresponds to an oxidation of a component of the encapsulation layer (5, 5a, 5b).

8. Method in accordance with one of the previous claims wherein the organic radicals are selected among one of the following categories:
- oxigen-centered radicals,
- carbon-centered radicals,
- sulfur-centered radicals,
- nitrogen-centered radicals.

9. Method in accordance with one of the previous claims wherein the encapsulation layer (5, 5a, 5b) comprises an anti-oxidant additive that is consumed during a lifetime of the photovoltaic module (1).

10. Method in accordance with the previous claim wherein the additive is a hindered amine light stabilizer "HALS" producing nitroxide radicals.

11. Method in accordance with one of the previous claims wherein the encapsulation layer (5, 5a, 5b) comprises Ethylene Vinyl Acetate "EVA" copolymer producing oxygen-centered and/or carbon-centered radicals and/or nitrogen-centered radicals and/or sulfur-centered radicals.

12. Method for assessing an ageing resistance of a photovoltaic module (1) comprising an embedded electron paramagnetic spectrometer made by a chipset, the method further comprising a step (101) of applying ageing conditions on the photovoltaic module (1) during a predetermined duration and a step (102) of applying an electron paramagnetic resonance spectroscopy measurement to the photovoltaic module (1) to determine a content of at least one selected radical generated within the photovoltaic module (1) during the step (101) of applying ageing conditions on the photovoltaic module (1) as a consequence of a degradation of the photovoltaic module (1) and/or a content of at least one additive within the photovoltaic module (1) which is consumed during the the step (101) of applying ageing conditions on the photovoltaic module (1) as a consequence of a degradation of the photovoltaic module (1) wherein the step (101) of applying ageing conditions comprises the application of ultra-violet "UV" radiations.

13. Method in accordance with the previous claim wherein the application of ageing conditions also comprises at least one of the following steps:
- applying a predefined moisture level,
- applying a predetermined temperature or predetermined temperature cycles.

14. Method in accordance with claim 11 or 12 wherein the steps of applying ageing conditions (101) and of applying an electron parametric resonance spectroscopy measurement to the photovoltaic module (1) (102) are achieved several times associated with different ageing cycles.

15. Method in accordance with one of claims 11 to 13 wherein the different steps (101, 102) are applied to different photovoltaic modules (1) having different compositions to compare the ageing resistance of the different photovoltaic modules (1).

16. Photovoltaic module (1) comprising photovoltaic cells (3) embedded in an encapsulation layer (5, 5a, 5b) and an embedded electron paramagnetic resonance spectrometer made by a chipset (10, 12) configured for applying an electron paramagnetic resonance spectroscopy measurement to a portion of the encapsulation layer (5, 5a, 5b) of the photovoltaic module (1) to determine a content of at least one selected organic radical generated within the encapsulation layer (5, 5a, 5b) during a lifetime of the photovoltaic module (1) as a consequence of a degradation of the encapsulation layer (5, 5a, 5b) and/or a content of at least one additive within the encapsulation layer (5, 5a, 5b) which is consumed during a lifetime of the photovoltaic module (1) as a consequence of a degradation of the encapsulation layer (5, 5a, 5b).

17. Photovoltaic module (1) in accordance with the previous claim wherein the electron paramagnetic resonance spectrometer is made by a chipset (10) embedded in the encapsulation layer (5, 5a, 5b) and a magnet (12) arranged on the back side of the photovoltaic module (1) next to the chipset (10).

18. Photovoltaic module (1) in accordance with claim 16 or 17 comprising a plurality of electron paramagnetic resonance chipsets (10, 12) arranged in different locations of the photovoltaic module (1), notably in locations close to the edges and close to the center of the photovoltaic module (1).

## Patentansprüche

1. Verfahren zur Beurteilung eines alterungsbedingten Abbauzustands eines Photovoltaikmoduls (1), umfassend ein Laminat aus mehreren Schichten, das aus unterschiedlichen Elementen gefertigt ist, umfassend ein elektronenparamagnetisches Resonanzspektrometer, das aus einem Chipsatz (10, 12) gebildet ist, der in das Laminat eingebettet ist, wobei das Verfahren einen Schritt des Anwendens einer elektronenparamagnetischen Resonanzspektroskopiemessung auf das Photovoltaikmodul (1) umfasst, um einen Gehalt an mindestens einem ausgewählten Radikal, das während einer Lebensdauer des Photovoltaikmoduls (1) infolge eines Abbaus der Elemente des Photovoltaikmoduls (1) erzeugt wurde, und/oder einen Gehalt an mindestens einem Additiv innerhalb des Photovoltaikmoduls (1) zu bestimmen, das während der Lebensdauer des Photovoltaikmoduls (1) infolge des Abbaus von Elementen des Photovoltaikmoduls (1) verbraucht wird.

2. Verfahren nach Anspruch 1, wobei das Photovoltaikmodul (1) Photovoltaikzellen (3) umfasst, die in eine Verkapselungsschicht (5, 5a, 5b) eingebettet sind, und wobei die elektronenparamagnetische Resonanzspektroskopiemessung angewendet wird, um einen Gehalt an mindestens einem ausgewählten organischen Radikal, das innerhalb der Verkapselungsschicht (5, 5a, 5b) während einer Lebensdauer des Photovoltaikmoduls (1) infolge eines Abbaus von Elementen der Verkapselungsschicht (5, 5a, 5b) erzeugt wird, und/oder einen Gehalt von mindestens einem Additiv innerhalb der Verkapselungsschicht (5, 5a, 5b) zu bestimmen, das während der Lebensdauer des Photovoltaikmoduls (1) infolge eines Abbaus der Verkapselungsschicht (5, 5a, 5b) verbraucht wird.

3. Verfahren nach Anspruch 1 oder 2, wobei das mindestens eine organische Radikal gemäß Umgebungsbedingungen des Photovoltaikmoduls (1) ausgewählt wird, wie einer Menge an Lichtexposition, einer Menge an Feuchtigkeit und/oder einer Menge an Sauerstoff.

4. Verfahren nach einem der vorhergehenden Ansprüche, wobei die Anwendung einer elektronenparamagnetischen Resonanzspektroskopiemessung auf das Photovoltaikmodul (1) in unterschiedlichen Zeitintervallen über eine vorhergesagte Lebensdauer des Photovoltaikmoduls (1) erreicht wird, um eine zeitliche Entwicklung des alterungsbedingten Abbaus zu überwachen.

5. Verfahren nach einem der vorhergehenden Ansprüche, wobei die Anwendung einer elektronenparamagnetischen Resonanzspektroskopiemessung an Abschnitten des Photovoltaikmoduls (1) erreicht wird, die unterschiedlichen Stellen zugeordnet sind, insbesondere an einem Randabschnitt und einem mittleren Abschnitt des Photovoltaikmoduls (1).

6. Verfahren nach einem der vorhergehenden Ansprüche, wobei das Photovoltaikmodul (1) an einer Produktionsstätte installiert ist, und wobei die Anwendung einer elektronenparamagnetischen Resonanzspektroskopiemessung in situ direkt an dem Photovoltaikmodul (1) der Produktionsstätte erreicht wird.

7. Verfahren nach einem der vorhergehenden Ansprüche, wobei der Abbau der Verkapselungsschicht (5, 5a, 5b) einer Oxidation einer Komponente der Verkapselungsschicht (5, 5a, 5b) entspricht.

8. Verfahren nach einem der vorhergehenden Ansprüche, wobei die organischen Radikale ausgewählt sind aus einer der folgenden Kategorien:
- Radikalen mit Sauerstoffzentrum,
- Radikalen mit Kohlenstoffzentrum,
- Radikalen mit Schwefelzentrum,
- Radikalen mit Stickstoffzentrum.

9. Verfahren nach einem der vorhergehenden Ansprüche, wobei die Verkapselungsschicht (5, 5a, 5b) ein Antioxidansadditiv umfasst, das während einer Lebensdauer des Photovoltaikmoduls (1) verbraucht wird.

10. Verfahren nach dem vorhergehenden Anspruch, wobei das Additiv ein gehinderter Amin-Lichtstabilisator "HALS" ist, der Stickoxidradikale produziert.

11. Verfahren nach einem der vorhergehenden Ansprüche, wobei die Verkapselungsschicht (5, 5a, 5b) EthylenVinylacetat- "EVA"-Copolymer umfasst, das Radikale mit Sauerstoffzentrum und/oder Kohlenstoffzentrum und/oder Radikale mit Stickstoffzentrum und/oder Radikale mit Schwefelzentrum produziert.

12. Verfahren zur Beurteilung von Alterungsbeständigkeit eines Photovoltaikmoduls (1), umfassend ein eingebettetes elektronenparamagnetisches Spektrometer, das aus einem Chipsatz gebildet ist, wobei das Verfahren des Weiteren umfasst:
einen Schritt (101) des Anwendens von Alterungsbedingungen auf das Photovoltaikmodul (1) während einer vorbestimmten Dauer, und einen Schritt (102) des Anwendens einer elektronenparamagnetischen Resonanzspektroskopiemessung auf das Photovoltaikmodul (1), um einen Gehalt an mindestens einem ausgewählten Radikal, das innerhalb des Photovoltaikmoduls (1) während des Schrittes (101) des Anwendens von Alterungsbedingungen auf das Photovoltaikmodul (1) infolge von Abbau des Photovoltaikmoduls (1) erzeugt wurde, und/oder einen Gehalt an mindestens einem Additiv innerhalb des Photovoltaikmoduls (1) zu bestimmen, das während des Schrittes (101) des Anwendens von Alterungsbedingungen auf das Photovoltaikmodul (1) infolge eines Abbaus des Photovoltaikmoduls (1) verbraucht wurde, wobei der Schritt (101) des Anwendens von Alterungsbedingungen das Anwenden von ultravioletter "UV"-Strahlung umfasst.

13. Verfahren nach dem vorhergehenden Anspruch, wobei die Anwendung der Alterungsbedingungen auch mindestens einen der folgenden Schritte umfasst:
- Anwenden eines vordefinierten Feuchtigkeitsniveaus,
- Anwenden einer vorbestimmten Temperatur oder von vorbestimmten Temperaturzyklen.

14. Verfahren nach Anspruch 11 oder 12, wobei die Schritte des Anwendens von Alterungsbedingungen (101) und des Anwendens einer elektronenparametrischen Resonanzspektroskopiemessung (102) auf das Photovoltaikmodul (1) mehrfach in Verbindung mit unterschiedlichen Alterungszyklen erreicht werden.

15. Verfahren nach einem der Ansprüche 11 bis 13, wobei die unterschiedlichen Schritte (101, 102) auf unterschiedliche Photovoltaikmodule (1) mit unterschiedlichen Zusammensetzungen angewendet werden, um die Alterungsbeständigkeit der unterschiedlichen Photovoltaikmodule (1) zu vergleichen.

16. Photovoltaikmodul (1), umfassend Photovoltaikzellen (3), die in eine Verkapselungsschicht (5, 5a, 5b) eingebettet sind, und ein eingebettetes elektronenparamagnetisches Resonanzspektrometer, das durch einen Chipsatz (10, 12) gebildet ist, der ausgestaltet ist, um eine elektronenparamagnetische Resonanzspektroskopiemessung auf einen Abschnitt der Verkapselungsschicht (5, 5a, 5b) des Photovoltaikmoduls (1) anzuwenden, um einen Gehalt an mindestens einem ausgewählten organischen Radikal, das innerhalb der Verkapselungsschicht (5, 5a, 5b) während einer Lebensdauer des Photovoltaikmoduls (1) infolge eines Abbaus der Verkapselungsschicht (5, 5a, 5b) erzeugt wird, und/oder einen Gehalt an mindestens einem Additiv innerhalb der Verkapselungsschicht (5, 5a, 5b) zu bestimmen, das während einer Lebensdauer des Photovltaikmoduls (1) infolge eines Abbaus der Verkapselungsschicht (5, 5a, 5b) verbraucht wird.

17. Photovoltaikmodul (1) nach dem vorhergehenden Anspruch, wobei das elektronenparamagnetische Resonanzspektrometer durch einen Chipsatz (10) gebildet ist, der in die Verkapselungsschicht (5, 5a, 5b) eingebettet ist, und einen Magneten (12), der auf der Rückseite des Photovoltaikmoduls (1) neben dem Chipsatz (10) angeordnet ist.

18. Photovoltaikmodul (1) nach Anspruch 16 oder 17, umfassend eine Vielzahl von elektronenparamagnetischen Resonanzchipsätzen (10, 12), die an unterschiedlichen Stellen des Photovoltaikmoduls (1) angeordnet sind, insbesondere an Stellen nahe den Rändern und nahe der Mitte des Photovoltaikmoduls (1).

## Revendications

1. Procédé destiné à évaluer un état de dégradation par vieillissement d'un module photovoltaïque (1) comprenant un stratifié de plusieurs couches constituées de différents éléments comprenant un spectromètre de résonance paramagnétique électronique constitué d'un jeu de puces (10, 12) incorporé dans le stratifié, le procédé comprenant une étape d'application d'une mesure par spectroscopie de résonance paramagnétique électronique au module photovoltaïque (1) pour déterminer une teneur d'au moins un radical sélectionné généré pendant une durée de vie du module photovoltaïque (1) à la suite d'une dégradation d'éléments du module photovoltaïque (1) et/ou une teneur d'au moins un additif à l'intérieur du module photovoltaïque (1) qui est consommé pendant la durée de vie du module photovoltaïque (1) à la suite d'une dégradation d'éléments du module photovoltaïque (1).

2. Procédé selon la revendication 1 dans lequel le module photovoltaïque (1) comprend des cellules photovoltaïques (3) incorporées dans une couche d'encapsulation (5, 5a, 5b) et dans lequel la mesure par spectroscopie de résonance paramagnétique électronique est appliquée pour déterminer une teneur d'au moins un radical organique sélectionné généré à l'intérieur de la couche d'encapsulation (5, 5a, 5b) pendant une durée de vie du module photovoltaïque (1) à la suite d'une dégradation d'éléments de la couche d'encapsulation (5, 5a, 5b) et/ou une teneur d'au moins un additif à l'intérieur de la couche d'encapsulation (5, 5a, 5b) qui est consommé pendant la durée de vie du module photovoltaïque (1) à la suite d'une dégradation de la couche d'encapsulation (5, 5a, 5b) .

3. Procédé selon la revendication 1 ou 2 dans lequel l'au moins un radical organique est sélectionné en fonction de conditions environnementales du module photovoltaïque (1) telles qu'une quantité d'exposition à la lumière, une quantité d'humidité et/ou une quantité d'oxygène.

4. Procédé selon une des revendications précédentes dans lequel l'application d'une mesure par spectroscopie de résonance paramagnétique électronique au module photovoltaïque (1) est réalisée à différents intervalles de temps sur une durée de vie prédite du module photovoltaïque (1) pour surveiller une évolution temporelle de la dégradation par vieillissement.

5. Procédé selon une des revendications précédentes dans lequel l'application d'une mesure par spectroscopie de résonance paramagnétique électronique est réalisée sur des parties du module photovoltaïque (1) associées à différents emplacements, en particulier une partie de bord et une partie centrale du module photovoltaïque (1).

6. Procédé selon une des revendications précédentes dans lequel le module photovoltaïque (1) est installé sur un site de production et dans lequel l'application d'une mesure par spectroscopie de résonance paramagnétique électronique est réalisée in situ directement sur le module photovoltaïque (1) du site de production.

7. Procédé selon une des revendications précédentes dans lequel la dégradation de la couche d'encapsulation (5, 5a, 5b) correspond à une oxydation d'un composant de la couche d'encapsulation (5, 5a, 5b).

8. Procédé selon une des revendications précédentes dans lequel les radicaux organiques sont sélectionnés parmi une des catégories suivantes :
- radicaux centrés sur l'oxygène,
- radicaux centrés sur le carbone,
- radicaux centrés sur le soufre,
- radicaux centrés sur l'azote.

9. Procédé selon une des revendications précédentes dans lequel la couche d'encapsulation (5, 5a, 5b) comprend un additif antioxydant qui est consommé pendant une durée de vie du module photovoltaïque (1).

10. Procédé selon la revendication précédente dans lequel l'additif est un photostabilisant à base d'amine stériquement encombrée « HALS » produisant des radicaux nitroxyde.

11. Procédé selon une des revendications précédentes dans lequel la couche d'encapsulation (5, 5a, 5b) comprend un copolymère éthylène-acétate de vinyle « EVA » produisant des radicaux centrés sur l'oxygène et/ou centrés sur le carbone et/ou des radicaux centrés sur l'azote et/ou des radicaux centrés sur le soufre.

12. Procédé destiné à évaluer une résistance au vieillissement d'un module photovoltaïque (1) comprenant un spectromètre paramagnétique électronique incorporé constitué d'un jeu de puces, le procédé comprenant en outre une étape (101) d'application de conditions de vieillissement sur le module photovoltaïque (1) pendant une durée prédéterminée et une étape (102) d'application d'une mesure par spectroscopie de résonance paramagnétique électronique au module photovoltaïque (1) pour déterminer une teneur d'au moins un radical sélectionné généré à l'intérieur du module photovoltaïque (1) pendant l'étape (101) d'application de conditions de vieillissement sur le module photovoltaïque (1) à la suite d'une dégradation du module photovoltaïque (1) et/ou une teneur d'au moins un additif à l'intérieur du module photovoltaïque (1) qui est consommé pendant l'étape (101) d'application de conditions de vieillissement sur le module photovoltaïque (1) à la suite d'une dégradation du module photovoltaïque (1), dans lequel l'étape (101) d'application de conditions de vieillissement comprend l'application de rayons ultraviolets « UV ».

13. Procédé selon la revendication précédente dans lequel l'application de conditions de vieillissement comprend également au moins une des étapes suivantes :
- application d'un niveau d'humidité prédéfini,
- application d'une température prédéterminée ou de cycles de température prédéterminés.

14. Procédé selon la revendication 11 ou 12 dans lequel les étapes d'application de conditions de vieillissement (101) et d'application d'une mesure par spectroscopie de résonance paramétrique électronique au module photovoltaïque (1) (102) sont réalisées plusieurs fois associées à différents cycles de vieillissement.

15. Procédé selon une des revendications 11 à 13 dans lequel les différentes étapes (101, 102) sont appliquées à différents modules photovoltaïques (1) ayant différentes compositions pour comparer la résistance au vieillissement des différents modules photovoltaïques (1).

16. Module photovoltaïque (1) comprenant des cellules photovoltaïques (3) incorporées dans une couche d'encapsulation (5, 5a, 5b) et un spectromètre de résonance paramagnétique électronique incorporé constitué d'un jeu de puces (10, 12) conçu pour appliquer une mesure par spectroscopie de résonance paramagnétique électronique à une partie de la couche d'encapsulation (5, 5a, 5b) du module photovoltaïque (1) pour déterminer une teneur d'au moins un radical organique sélectionné généré à l'intérieur de la couche d'encapsulation (5, 5a, 5b) pendant une durée de vie du module photovoltaïque (1) à la suite d'une dégradation de la couche d'encapsulation (5, 5a, 5b) et/ou une teneur d'au moins un additif à l'intérieur de la couche d'encapsulation (5, 5a, 5b) qui est consommé pendant une durée de vie du module photovoltaïque (1) à la suite d'une dégradation de la couche d'encapsulation (5, 5a, 5b).

17. Module photovoltaïque (1) selon la revendication précédente dans lequel le spectromètre de résonance paramagnétique électronique est constitué d'un jeu de puces (10) incorporé dans la couche d'encapsulation (5, 5a, 5b) et d'un aimant (12) disposé sur la face arrière du module photovoltaïque (1) à côté du jeu de puces (10).

18. Module photovoltaïque (1) selon la revendication 16 ou 17 comprenant une pluralité de jeux de puces de résonance paramagnétique électronique (10, 12) disposés à différents emplacements du module photovoltaïque (1), notamment à des emplacements proches des bords et proches du centre du module photovoltaïque (1).
